# EUROPEAN PATENT APPLICATION

(11) **EP 4 518 274 A1**
(43) Date of publication of application: **05.03.2025**
(21) Application number: 23812004.2
(22) Date of filing: 14.04.2023
(51) Int. Cl.: H04L 41/40, H04L 41/082, H04L 41/342

(54) **ELECTRONIC DEVICE AND METHOD FOR UPGRADING VIRTUALIZED NETWORK FUNCTION IN NETWORK FUNCTION VIRTUALIZATION ENVIRONMENT**

(30) Priority: 27.05.2022 KR 20220065696
(71) Applicant: Samsung Electronics Co., Ltd., Suwon-si, Gyeonggi-do 16677 (KR)
(72) Inventor: NAM, Hyunyoung, Suwon-si Gyeonggi-do 16677 (KR)
(74) Representative: HGF
(86) International application number: PCT/KR2023/005070
(87) International publication number: WO 2023/229227

(57) **Abstract**

A method performed by a virtual network function manager (VNFM) of management and orchestration (MANO), according to embodiments, may comprise an operation of receiving an upgrade request of a virtual network function (VNF) from an operator via a network function virtualization orchestrator (NFVO). The method may comprise an operation of transmitting a request message for upgrading software (SW) to the VNF. The method may comprise an operation of receiving, from the VNF, a response message for upgrading the SW. The method may comprise an operation of transmitting, to the VNF, a task inquiry message for requesting a task type for upgrading the SW. The method may comprise an operation of receiving, from the VNF, a task response message including information on the task type. The method may comprise an operation of performing a task according to the task type for upgrading the SW, on the basis of the task response message.

## Description

### [Technical Field]

The disclosure generally relates to a network function virtualization (NFV) environment. More particularly, the disclosure relates to an electronic device and a method for upgrading a virtualized network function (VNF) in such an NFV environment.

### [Background Technology]

Network function virtualization (NFV) is a technology that allows an operator of a communication network to manage the network more quickly and flexibly, by enabling network devices implemented in hardware to be installed or removed in/from a server in the form of software.

### [Detailed Description of Invention]

### [Technical Solution]

According to embodiments, a method performed by a virtual network function manager (VNFM) of management and orchestration (MANO) may include receiving, from an operator through network function virtualization orchestrator (NFVO), an upgrade request of virtual network function (VFN). The method may include transmitting, to the VNF, a request message for a software (SW) upgrade. The method may include receiving, from the VNF, a response message for the SW upgrade. The method may include transmitting, to the VNF, a task query message for requesting a task type for the SW upgrade. The method may include receiving, from the VNF, a task response message including information on the task type. The method may include performing a task according to the task type for the SW upgrade based on the task response message.

According to embodiments, an electronic device of a virtual network function manager (VNFM) of management and orchestration (MANO) may include at least one transceiver, and at least one processor coupled to the at least one transceiver. The at least one processor may be configured to receive, from an operator through network function virtualization orchestrator (NFVO), an upgrade request of virtual network function (VFN). The at least one processor may be configured to transmit, to the VNF, a request message for a software (SW) upgrade. The at least one processor may be configured to receive, from the VNF, a response message for the SW upgrade. The at least one processor may be configured to transmit, to the VNF, a task query message for requesting a task type for the SW upgrade. The at least one processor may be configured to receive, from the VNF, a task response message including information on the task type. The at least one processor may be configured to perform a task according to the task type for the SW upgrade based on the task response message.

According to embodiments, a method performed by a virtual network function (VNF) may include receiving, from a virtual network function manager (VNFM) of management and orchestration (MANO), a request message for a software (SW) upgrade. The method may include transmitting, to the VNFM, a response message for the SW upgrade. The method may include receiving, from the VNFM, a task query message for requesting a task type for the SW upgrade. The method may include transmitting, to the VNFM, a task response message including information on the task type.

According to embodiments, an electronic device of a virtual network function (VNF) may include at least one transceiver, and at least one processor coupled to the at least one transceiver. The at least one processor may be configured to receive, from a virtual network function manager (VNFM) of management and orchestration (MANO), a request message for a software (SW) upgrade. The at least one processor may be configured to transmit, to the VNFM, a response message for the SW upgrade. The at least one processor may be configured to receive, from the VNFM, a task query message for requesting a task type for the SW upgrade. The at least one processor may be configured to transmit, to the VNFM, a task response message including information on the task type.

### [Brief Description of Drawings]

FIG. 1A illustrates examples of a network service according to embodiments.
FIG. 1B is a diagram for describing virtualized network function (VNF) according to embodiments.
FIG. 2A illustrates an example of network function virtualization (NFV)-management and orchestration (MANO) architecture framework of 3rd generation partnership project (3GPP), according to embodiments.
FIG. 2B illustrates an example of NFV-MANO architecture framework of European telecommunications standards institute (ETSI) according to embodiments.
FIG. 3 illustrates an example of signaling for query-based VNF upgrade according to embodiments.
FIG. 4 illustrates an example of an on-boarding procedure in NFV-MANO architecture framework according to embodiments.
FIG. 5 illustrates an example of a query-based VNF upgrade procedure in NFV-MANO architecture framework according to embodiments.
FIG. 6 illustrates an example of a query-based VNF upgrade procedure according to embodiments.
FIG. 7 illustrates an example of a lifecycle for a query-based VNF upgrade procedure according to embodiments.
FIG. 8 illustrates a functional configuration of an electronic device according to embodiments.

### [Mode For Carrying Out Invention]

Hereinafter, the terms used in the disclosure are merely used to better describe a certain embodiment and may not be intended to limit the scope of other embodiments. A singular expression may include a plural expression, unless the context clearly dictates otherwise. The terms used herein, including technical and scientific terms, may have the same meanings as those commonly understood by those skilled in the art to which the disclosure pertains. Terms defined in a general dictionary among the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various examples of the disclosure described below, a hardware approach will be described as an example. However, since various embodiments of the disclosure may include a technology that utilizes both the hardware-based approach and the software-based approach, the various embodiments are not intended to exclude the software-based approach.

In the following description, terms referring to a signal (e.g., signal, information, message, signaling), terms for an operation state (e.g., step, operation, procedure), terms referring to a resource (e.g., symbol, slot, subframe, radio frame, subcarrier, resource element (RE), resource block (RB), bandwidth part (BWP), occasion), terms referring to data (e.g., packet, user stream, information, bit, symbol, codeword), terms referring to a channel, terms referring to network entities, terms referring to components of a device or apparatus, and so on are exemplified only for convenience of description. Therefore, the disclosure is not limited to terms to be described below, and other terms having equivalent technical meanings may be used. Further, as used hereinafter, terms such as e.g., '~ portion', '~ unit', '~ module', '~ part', '~ body' or the like may refer to at least one shape of structure or a unit for processing a certain function.

Throughout the disclosure, an expression such as e.g., 'more than' or 'less than' may be used to determine whether a specific condition is satisfied or fulfilled or not, but it is merely of a description for expressing an example and is not intended to exclude the meaning of 'more than or equal to' or 'less than or equal to'. A condition described as 'more than or equal to' may be replaced with 'more than', a condition described as 'less than or equal to' may be replaced with 'less than', and a condition described as 'more than or equal to and less than' may be replaced with 'more than and less than or equal to', respectively. Further, hereinafter, 'A' to 'B' may refer to at least one of the elements from A (including A) to B (including B). Hereinafter, 'C' and/or 'D' may refer to including at least one of 'C' or 'D', that is, {'C', 'D', or 'C' and 'D'}.

While the disclosure describes various embodiments using terms used in some communication standards (e.g., 3rd Generation Partnership Project (3GPP) or European Telecommunications Standards Institute (ETSI)), they are only examples for description. Various embodiments of the disclosure may be easily modified and applied to other communication systems.

Hereinafter, the disclosure relates to an electronic device and a method for upgrading a virtual network function (VNF) in network function virtualization (NFV)-management and orchestration (MANO). Specifically, the disclosure describes a method for efficiently performing and managing a software upgrade for VNF regardless of the VNF structure through query and response between a virtual network function manager (VNFM) and a virtual network function (VNF) in the NFV-MANO.

The disclosure provides an electronic device and a method for upgrading a virtual network function (VNF) in a network function virtualization (NFV) environment.

The disclosure provides an electronic device and a method for performing a procedure defined to update a VNF regardless of a vendor or regardless of a structure or characteristics of VNFs in the vendor in an NFV environment.

The disclosure provides an electronic device and a method for updating a VNF according to a query to a VNF and a response of the VNF to the query in an NFV environment.

The electronic device and method according to the embodiments of the disclosure can perform upgrading of a VNF, irrespectively of the structure or characteristics of the VNF, through a query to the VNF and a response from the VNF in network function virtualization (NFV)-management and orchestration (MANO).

The effects that can be obtained from the disclosure are not limited to those mentioned above, and other effects not mentioned herein may be clearly understood by those having ordinary knowledge in the technical field to which the disclosure belongs from the following description.

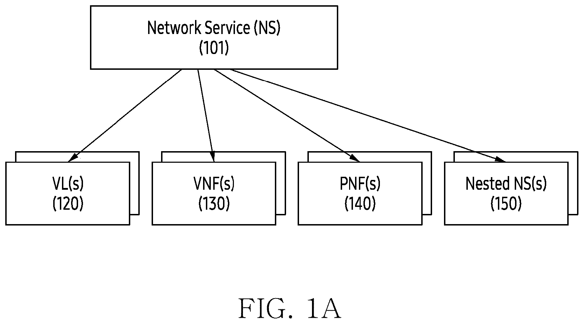

FIG. 1A illustrates examples of a network service according to embodiments. The network service is a component of NFV-MANO and may be an NFV network service.

Referring to FIG. 1A, the NFV network service is a composition of network functions (NFs) arranged as a set of functions and/or NSs.

As shown in FIG. 1A, a network service 101 may include one or more possible constituent objects. The network service 101 may be used by NFV-MANO (NFV Management and Orchestration) functions to deploy an NS instance. The network service 101 may include at least one of one or more virtual links (VLs) 120, one or more virtual network functions (VNFs) 130, one or more physical network functions (PNFs) 140, or one or more overlapping nested network services (NSs) 150. From a management and orchestration point of view, the NFV-MANO may use an NS descriptor (NSD) to manage a lifecycle of the NS.

The VL 120 may abstract two or more connection types and attributes among VNF components (VNFC), the VNF 130, the PNF 140, and the overlapping NS 150. From a management and orchestration point of view, the NFV-MANO may use VNF VL descriptor (VLD) and NS VLD.

The VNF 130 represents an NF implementation that may be disposed in a virtualized infrastructure. The VNF 130 is irrelevant to the functionality of the NF indicated by the VNF 130. From an NFV-MANO perspective, the arrangement and operation requirements of the VNF 130 may be stored by an on-boarded VNF descriptor (VNFD) as part of a file archive known as a VNF package. The VNFD may explain the attributes and requirements required to realize an instance of the VNF 130 and capture the requirements for managing the corresponding lifecycle in an abstracted manner.

The PNF 140 represents a software workload closely connected to the hardware arranged. In case that the PNF is part of the NS, the NFV-MANO may use a PNF descriptor (PNFD) to manage PNF connectivity with other components of this NS instance.

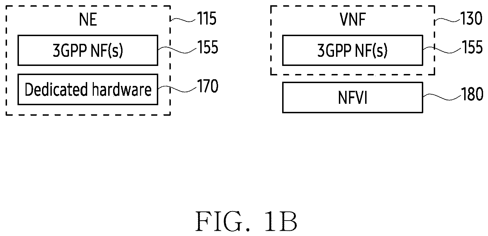

FIG. 1B is a diagram for describing a virtualized network function (VNF) according to embodiments. The VNF illustrates the VNF 130 of FIG. 1A. The 3GPP system may provide various technologies for virtualization. The network and service providers may use different information in various ways that may vary from network to network and from time to time. From a 3GPP perspective, the VNF may include a network function (NF) of a network element (NE). The relationship between an NE instance and a VNF instance may differ depending on the relationship between the NF of the NE and the function included in the VNF.

Referring to FIG. 1B, components of the network element (NE) 115 may include an NF 135 of 3GPP. Here, the NF 135 refers to a processing function in a network having a defined functional operation and a defined interface. The components of the NE 115 may include dedicated hardware 170. The NF 135 of the NE 115 may be executed in a resource of the dedicated hardware 170.

The components of the VNF 130 may include an NF 155 of the 3GPP. NF 155 refers to a processing function in a network having a defined functional operation and a defined interface. The VNF 130 refers to an NF executed in the NFV infrastructure (NFVI) 180. The VNF 130 may include a) functionality of the NF, b) elements for supporting the NF function, and c) elements for allowing the VNF 130 to be executed in the NFVI 180. Here, the elements a and b may be an application part of the VNF, and the element c may be a virtualization-specific part of the VNF 130. Examples of the elements for supporting the NF function may include a library, a database, and a protocol stack. According to an embodiment, for the same type of NF, the function of the VNF, that is, the NF 155, may be substantially the same as that of the NF 135 of the NE 115.

The application part of the VNF 130 may be managed by an element manager (EM). For example, when the EM is not realized by the VNF 130, the EM may manage the application part of the VNF 130 through the defined interface. For another example, the functionality of the EM and the VNF 130 may be implemented in one VNF. The virtualization related part of the VNF 130 may be managed by a VNF manager (VNFM).

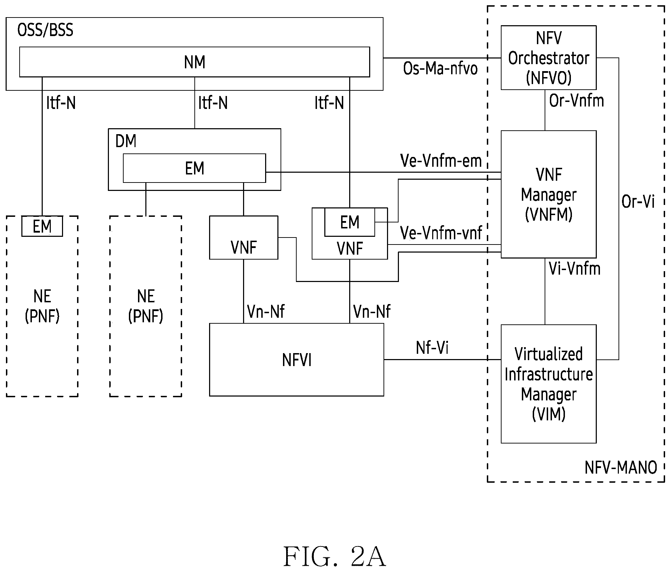

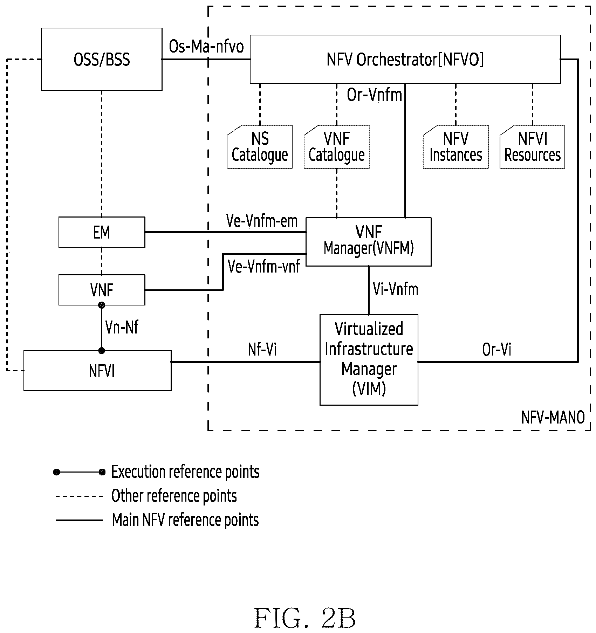

The international 5G communication standards such as 3GPP, ETSI and so on define a management and orchestration (MANO) system for managing a virtualized base station. Hereinafter, an architecture of an NFV environment defined in each standard will be described with reference to FIGS. 2A and 2B.

FIG. 2A illustrates an example of network function virtualization (NFV)-management and orchestration (MANO) architecture framework of 3rd generation partnership project (3GPP) according to embodiments. Description of EM, NE, PNF, VNF, or NFVI illustrated in FIG. 2A will be made referring to FIGS. 1A to 1B.

FIG. 2B illustrates an example of an NFV-MANO architecture framework of European telecommunications standards institute (ETSI) according to embodiments. Description of EM, NE, PNF, VNF, or NFVI illustrated in FIG. 2B may be made with reference to FIGS. 1A to 1B.

Referring to FIGS. 2A and 2B, the 3GPP and ETSI define the same network elements and the same reference points for the NFV-MANO architecture framework. The same name (e.g., VNFM, VIM, NFVO) and the same reference point (e.g., Ve-VNFM-em, Ve-Vnfm-vnf) will refer to the same interface.

Physical mobile network management may be mainly dependent on interface Itf-N. With the introduction of NFV, mobile network management may designate virtualized network function management. The mobile network management may include interaction with NFV-MANO performed through defined reference points as well as one interface Itf-N. The mobile network may include a physical network element and a virtual network element. Application-related aspects of VNFs and PNFs corresponding to a physical NE may be managed in a 3GPP management system.

In order to expand the management functions for the virtualized network and the VNF, a network manager (NM), a domain manager (DM), and an element manager (EM) may be defined in the 3GPP management system. The NM is one of the roles of OSS (operating support system)/BSS and is a consumer of a reference point Os-Ma-nfvo. In the 3GPP specification, the NM may perform one of the roles of the OSS/BSS. The domain manager (DM) may provide an element management function and a domain management function for a sub-network. Associated domain managers may provide multi-vendor and multi-technical network management functions. The EM may provide an end-user function package for managing a set of closely related types of network elements. EM may support an element management function and a sub-network management function. In case where the EM supports an extension function, the EM may manage at least one of the PNF or the VNF.

The NFV-MANO may include an NFV orchestrator (NFVO), a VNF manager (NFVM), and a virtualized infrastructure manager (VIM). The NFVO is a functional block for ensuring an optimized allocation of necessary resources and connections, by managing a lifecycle of a network service and adjusting management of an NS lifecycle, a VNF lifecycle (supported by VNFM), and an NFVI resource (supported by VIM). The VNFM is a functional block responsible for managing the lifecycle of VNF. The VIM is generally a functional block that controls and manages NFVI computing, storage, and network resources within an infrastructure domain (e.g., NFVI) of one operator.

According to an embodiment, Os-Ma-nfvo may be used for NS lifecycle management, NS performance management, NS failure management, NSD management, and VNF package management that are generated by the NFVO. According to an embodiment, Ve-Vnfm-em and Ve-Vnfm-vnf may be typically used for VNF lifecycle management, VNF and VR failure information transfer or performance measurement information, and virtualization configuration and so on.

The MANO of VNF may include fault management, configuration management, accounting management, performance management, security management (FCAPS). Further, due to the separation of network functions in the physical infrastructure in use, a set of new management functions focusing on generation of virtualized resources and lifecycle management required for the VNF may be obtained. This set of management functions may be referred to as VNF management. The VNF management may include the following tasks and may be responsible for the lifecycle management of VNF:
1) Instantiation of VNF (VNF generation using VNF on-boarding artifacts);
2) VNF scale (increase or decrease of VNF capacity);
3) Update and/or upgrade of VNF (support configuration change of VNF software and/or various complexity); and
4) Termination of VNF (release VNF-related NFVI resources and return the same to an NFVI resource pool).

The NFV-MANO includes NFVO, VNFM, and VIM, and although the roles of respective components are slightly different, all the components have a common goal of lifecycle management of the VNF. The NFV-MANO may be responsible for overall VNF management until the VNF is generated and deleted. As described above, the lifecycle management of the VNF may include a variety of functions. For example, the lifecycle management of the VNF may include a function of generating (i.e., instantiating) and deleting (i.e., terminating) the VNF. In addition, the lifecycle management of the VNF may include a scale-out/in function of increasing or decreasing the number of VNF components (VNFCs) in the VNF, and a function of upgrading software of the VNF. For example, operations for the lifecycle management are defined in the ETSI GR NFV-MAN standard as follows:

**[Table 1]**

| **Operations** | **Description** | **Notes** |
|---|---|---|
| Instantiate VNF | This operation allows creating a VNF instance. | |
| Query VNF | This operation allows retrieving VNF instance state and attributes. | Attributes returned can include for example number and location of VMs allocated to the VNF instance. |
| Scale VNF | This operation allows scaling (out/in, up/down) a VNF instance. | |
| Check VNF instantiation feasibility | This operation allows verifying if the VNF instantiation is possible. | No VNF instance is created as a result of the operation. |
| Heal VNF | This operation is used to request appropriate correction actions in reaction to a failure. | This assumes operational behavior for healing actions by VNFM has been described in the VNFD. An example could be switching between active and standby mode. |
| Update VNF software | This operation allows applying a minor/limited software update (e.g. patch) to a VNF instance. | The software update implies no structural changes (e.g. in configuration, topology, behavior, redundancy model). The goal is to not require termination/re-instantiation, or at least not for the entire VNF. |
| | | This operation is only required if the software update procedure requires a change in the VNF infrastructure e.g. changing an image. Software updates that can be performed using solely pre-existing functional blocks (e.g. EM) could not invoke this operation. |
| Modify VNF | This operation allows making structural changes (e.g. configuration, topology, behavior, redundancy model) to a VNF instance. | This could be expected to be designed as a transaction, rather than an atomic operation. |
| | | Depending on the "modification plan", it could involve multiple catalogue Management and VNF lifecycle management atomic operations, and could involve multiple VNFM managers. It is possible that this transaction cannot be exposed as an operation by the VNFM, and only offered as an extension when exposed by the NFVO. |
| Upgrade VNF software | This operation allows deploying a new software release to a VNF instance. | This could be expected to be designed as a transaction, rather than an atomic operation. |
| | | Depending on the "software upgrade plan", it could involve multiple catalogue Management and VNF lifecycle management atomic operations, and could involve multiple VNFM managers. It is possible that this transaction cannot be exposed as an operation by the VNFM, and only offered as an extension when exposed by the NFVO. This operation is only required if the software upgrade procedure requires a change in the VNF infrastructure e.g. changing an image. Software upgrades that can be performed using solely pre-existing functional blocks |
| | | (e.g. EM) could not invoke this operation. |
| Terminate VNF | This operation allows terminating gracefully or forcefully a previously created VNF instance. | |

In the communication standard, a procedure for a certain function is described together with a sequence diagram and a message format. Lifecycle management functions such as instantiation, termination, and scaling are separately described in the standard. Each vendor identifies the procedures described for each function and implements the lifecycle management functionality as an ETSI or 3GPP standard-based system, adapted to the procedure as much as possible. However, an sequence diagrams and message formats for soft upgrades among the lifecycles are not described in the standard. This is because it is not easy to define an integrated procedure as the software upgrades are often vendor-specific. Such a vendor-specific processing is due to the presence or absence of a master VM in a VNF defined for each vendor, VM-specific upgrade prioritization issues, the difference in the amount of pre-upgrade preparation work (e.g., switchover to standby), or the difference in preparation time for each vendor. Due to such differences in VNF structure for each vendor, it will not be easy for a MANO managing the lifecycle to uniformly process the upgrade procedures. In fact, the industry has proposed a scenario where one telecommunication company's MANO system manages VNFs from two different vendors, but due to the lack of standardized upgrade procedures, it may be difficult to upgrade to utilize the VNF structure and characteristics of each vendor. Besides, since there are different VNF structures such as virtualized EMS VNF, RAN VNF, and Core VNF even within one vendor, the MANO system is required to manage them in common.

As technology advances faster, software upgrades are becoming increasingly important to telecommunication businesses. Basically, in the telecommunications businesses, it is of utmost importance to avoid any service interruptions, so only a few minutes of service interruption will be very disastrous and critical in the telecommunications businesses, whereas it may not be so critical for general IT business operators. If such a service interruptions actually occurs, a range of damage compensation may be very wide and the amount of compensation may be very large, in the event of the telecommunication company compensating for all their users. Therefore, when vendors provide their communication equipment to telecommunication operators, they typically present reliability information (e.g., 99.99%, 99.999%, and so on). Reliability information refers to information on how many normal service operating hours are during annual operating hours. In other words, the vendor should theoretically quantify the service interruption time that can occur due to software upgrades, switchover between regions due to natural disasters (earthquakes, typhoons, etc.), switchover in a data center due to physical server failures, and so on. In addition, the vendor should minimize the service interruption time. At this time, the vendor requires an effort to minimize the service down time in tasks such as any expected service interruption, that is, service upgrade, aside from unexpected service interruption.

The VNF software upgrade operation, which is important for vendors to make a highly reliable system, may be managed with a separate lifecycle by the MANO system defined in the communication standard. However, currently, the VNF's software upgrade procedure or implementation direction is not separately described in the 3GPP or ETI standards. It is common in a virtualized network environment for one MANO to manage several types of VNFs (e.g., RAN, Core, and EMS). However, since there is no standard procedure for upgrading the VNF, it is not easy to define an upgrade procedure that flexibly accommodates different structures for each VNF.

Currently, a proprietary interface is separately defined according to each VNF internal structure, or inefficient work is performed to unify the structures of VNFs as much as possible. However, since the MANO is an infrastructure/platform that manages the entire VNF, it may not be reasonable to define an interface according to the characteristics of a specific VNF. Further, when a proprietary interface is defined, the interface will have to be newly defined accordingly whenever a VNF is added, thereby resulting in a large waste of manpower and resources. Furthermore, the MANO is required to accommodate together even VNFs designed/implemented by several vendors. However, unifying the VNF structures of all vendors is not easy for MANOs.

In other words, defining a specific interface in line with the VNF may result in an inefficient waste of manpower and resources. Further, when using a unified interface, the MANO and each VNF developer have to customize the interface every time a VNF is added, reducing the system flexibility. Since an upgrade procedure is defined for each vendor, defining the VNF structure for all multiple vendors in a single MANO system requires a lot of manpower and resources.

To address the aforementioned problems, embodiments of the disclosure propose an independent type of VNF software interface that is not affected by a specific VNF structure. The MANO system may perform software upgrades on various types of VNFs with one interface. The MANO system may query the VNF about a task, and the VNF may provide the MANO system with a task-related response. Through such queries and responses, a soft upgrade procedure irrelevant to the VNF structure may be performed. The upgrade procedure according to embodiments may provide an upgrade of software of each VNF irrespectively of whether the VNFs are provided from the same vendor or different vendors. The VNF is required to be associated with the software interface presented by MANO. Hereinafter, the software upgrade procedure of VNF according to embodiments of the disclosure uses minimal resources and enables interworking between the VNF and the MANO as quickly as possible.

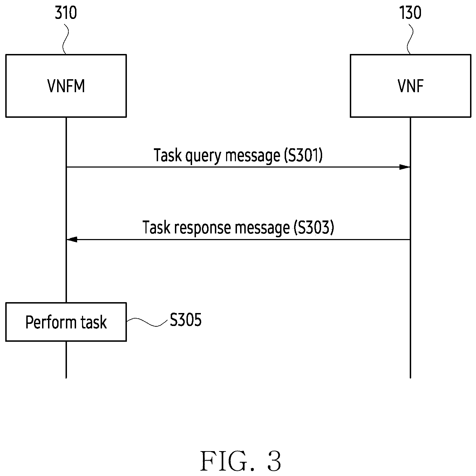

FIG. 3 illustrates an example of signaling for query-based VNF upgrade according to embodiments. Signaling of the query-based VNF upgrade may include a query and response procedure between VNFM and VNF of the MANO. Description of the VNFM 310 and the VNF 130 may be made with reference to the description of FIGS. 1A to 2B.

Referring to FIG. 3, in operation S301, the VNFM 310 may transmit a task query message to the VNF 130. Before describing a query-based VNF upgrade procedure according to embodiments of the disclosure, parameters related to a task will be described. A task type refers to a type of a specific operation that the VNF 130 requests the VNFM 310 to perform. Here, a specific operation may be referred to as a task. Task-topping refers to at least one parameter of a task corresponding to the task type. According to an embodiment, the task query message may be used to request a task type from the VNF 130. The task query message may be used to request task topping corresponding to the task type from the VNF 130. That is, the VNFM 310 may be used to query the VNF 130 about whether a new task is required.

When there is no task previously performed in the VNFM 310, the VNFM 310 may request a new task from the VNF 130 by transmitting a task query message, without a parameter indicating a separate request. Meanwhile, when there is a task previously performed in the VNFM 310, the VNFM 310 may be used to request a new task from the VNF 130 and transmit the result of the previously performed task to the VNF 130. According to an embodiment, when inquiring of the VNF 130 about the task, the VNFM 310 may reply to the VNF 130 with the previous task type and the task result for the previous task type.

In operation S303, the VNF 130 may transmit a task response message to the VNFM 310. According to an embodiment, the task response message may include information on the task type. Further, according to an embodiment, the task response message may include information on the task topping. The task type may be used to request the VNF 130 to perform a specific operation to the VNFM 310.

In operation S305, the VNFM 310 may perform a task. Upon receiving a task type, the VNFM 310 may perform a task corresponding to the task type. The VNFM 310 may serve to share the result of performing the operation and whether or not an error currently occurs with the VNF. The NFVO of the MANO system connected to the VNFM 310 may trigger an upgrade and provide a graphic user interface (GUI) for managing a lifecycle of the upgrade.

As described with reference to FIG. 3, when there is a task previously performed in the VNFM 310, the task query message may include information on the previous task type and information on the task result of the previous task type. In the query-based VNF software upgrade system, the VNFM 310 may query the VNF 130 about the next task to be performed, and the VNF 130 may utilize the predefined task type and information on the task result to perform the upgrade according to the request timing for each VNF.

According to an embodiment, the task type may be defined as shown in the following table.

**[Table 2]**

| **Type** | **Task-topping** | **Description** |
|---|---|---|
| REBUILD | VNFC list (ID)- source VNFD ID(identification) | include VNFC rebuild priority order |
| | - target VNFD ID | - VIM perform upgrade using the source N VNFD and target N+1 VNFD including image. |
| WAIT | - Wait Time | - VNF request to VNFM wait for a while cause of VNF internal job. VNFM waits for wait time provided by VNF. |
| JOB_COMPLETE | - None | - The software upgrade is completed and the lifecycle need to be end. |
| ERROR_FAILED_TEMP | - None | - VNF request to change lifecycle status to FAILED TEMP cause of VNF side error. (VNF request) |
| ERROR_LIFECYCLE_FAIL | - None | - VNF request to end the lifecycle after the VNF side rollback is completed. (VNF request). |
| ERROR ROLLED BACK | - None | |
| ... | ... | .... |
| Able to additionally add VNF proprietary type | | |

The elements of Table 2 described above are only of an example to describe the task types, and with the same or similar technical principles, any additional task type may be added thereto or some of the task types may be omitted therefrom. According to an embodiment, the task result may be defined as follows.

**[Table 3]**

| **Result** | **Description** |
|---|---|
| OK | - Task completed |
| NOK | - Task failed |
| RETRY | - Re-proceed from the work where the error occurred*In case of VNFM or VNF error status (FAILED_TEMP), operator selects retry option through NFVO UI. |
| ROLLBACK | - Restore the work where the error occurred.*In case of VNFM or VNF error status (FAILED _TEMP), operator selects Rollback option through NFVO UI |
| ROLLED_BACK | - Rollback Completed*If NVFM side error occurred and rolled back by user, VNF can't know the current status, so notify to VNF using this result. |
| LIFECYCLE_FAIL | - Software Upgrade Lifecycle end*In case of VNFM or VNF error status (FAILED _TEMP), operator selects Lifecycle fail option through NFVO UI. |

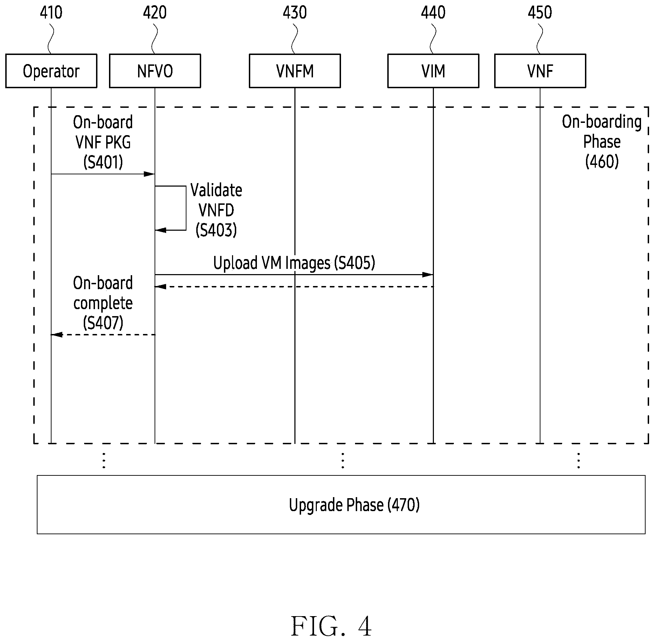

The elements of Table 3 described above are only of an example to describe the task result, and with the same or similar technical principles, additional task results may be added thereto or some of the task results may be omitted therefrom. FIG. 4 illustrates an example of an on-boarding procedure in an NFV-MANO architecture framework according to embodiments. The on-boarding flows are defined to manage the lifecycle of the network service. The on-boarding procedure refers to a procedure of uploading a package to a repository before instantiating or upgrading a virtual machine (VM).

Referring to FIG. 4, an operator 410 refers to an administrator of a network and may be a person or an upper layer system. Description of an NFVO 420, a VNFM 430, a VIM 440, and a VNF 450 may be made referring to the description of FIGS. 1A and 2B.

In operation S401, the operator 410 may perform on-boarding of the VNF package for the NFVO 420. The operator 410 may transmit the VNF package to the NFVO 420. The VNF package is an archive including VNF descriptor (VNFD), VNF-related software images, and additional artifacts (e.g., to check the integrity and verify the validity of the archive). For example, the current software version may be 'N'. The operator 410 may perform on-boarding of an 'N+1' version of VNF package to be used for software upgrade in a GUI of the NFVO 420. The VNF package may include an 'N+1' version of VNFD and an 'N+1' image. Although the operator 410 is illustrated in FIG. 4, any entity that transmits the NSD to the NFVO for the operator 410 may replace the operator 410.

In operation S403, the NFVO 420 may verify the VNFD. The VNFD describes VNF in terms of the deployment and operations and refers to a configuration template used in a lifecycle management process of the VNF instances and the VNF on-boarding. The NFVO 420 may verify the VNFD of the 'N+1' version and the image of the 'N+1' version. The NFVO 420 may verify the integrity and the reliability of the VNFD. Security information required for the verification may be provided as part of the VNFD.

In operation S405, the NFVO 420 may upload the VM images. The NFVO 420 may upload the verified 'N+1' version of the VNFD to the repository of the NFVO 420, and upload the 'N+1' version of the image to the VIM 440. The VIM 440 may then perform a rebuild procedure based on the 'N+1' version of the image.

In operation S407, the NFVO 420 may notify the operator 410 of completion of the on-boarding. The operator 410 may receive a notification indicating that the on-boarding procedure has finished in the GUI of the NFVO 420.

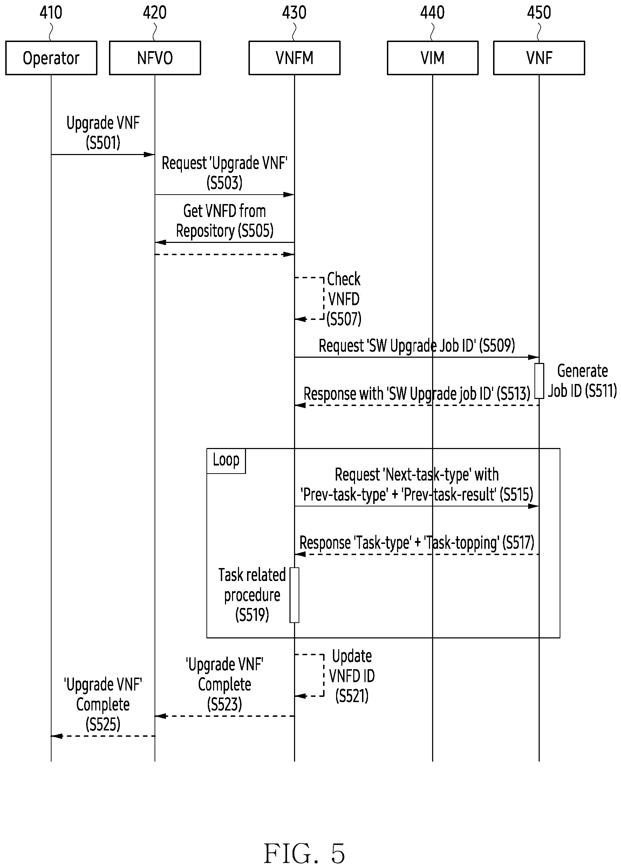

After the on-boarding phase 460, an upgrade phase 470 may be performed. A detailed procedure for the upgrade phase will be described with reference to FIG. 5.

FIG. 5 illustrates an example of a query-based VNF upgrade procedure in an NFV-MANO architecture framework according to embodiments. Operations of the query-based VNF upgrade procedure of FIG. 5 may correspond to the upgrade phase 470 of FIG. 4.

Referring to FIG. 5, in operation S501, the operator 410 may request the NFVO 420 to upgrade the VNF 450. For example, the operator 410 may select the VNF 450 to be upgraded from a software upgrade menu in the GUI of the NFVO 420.

In operation S503, the NFVO 420 may request the VNFM 430 to upgrade the VNF 450. In response to an input of the operator 410, the NFVO 420 may identify the VNF package. The VNF package may be related to the VNF 450. The NFVO 420 may trigger 'Upgrade VNF' to the VNFM.

In operation S505, the VNFM 430 may obtain the VNFD from the NFVO 420. The VNFM 430 may obtain the VNFD from the repository of the NFVO 420. The VNFM 430 may obtain a target version of the VNFD and store the obtained VFND in the storage of the NFVO 420.

In operation S507, the VNFM 430 may check the VNFD. The VNFM 430 may perform a validation check on the VNFD.

In operation S509, the VNFM 430 may request the VNF 450 to upgrade software (SW). The VNFM 430 may request a job ID (identification) for SW upgrade from the VNF 450.

In operation S511, the VNF 450 may generate the job ID. The job ID is an ID that can be tracked by the VNFM 430 while the lifecycle of upgrade is in progress. When upgrading or rollback is performed, the job ID may be used.

In operation S513, the VNFM 430 may transmit a response to the SW upgrade to the VNF 450. The VNF 450 may reply to the VNFM 430 with a response including the generated job ID. The job ID according to embodiments may be a globally unique identifier among all VNFs. According to an embodiment, it is required that a rule for an ID is defined for each vendor or for each VNF within the same vendor.

In operation S515, the VNFM 430 may transmit a task query message to the VNF 450. According to an embodiment, although not illustrated in FIG. 5, when a previous task exists, the VNFM 430 may reply to the previous task type and the result of performing the previous task together. For example, the task type may refer to the Table 2 described above. For example, the result of performing the previous task may refer to the Table 3 described above. As the operation S515 corresponds to the operation S301 of FIG. 3, the description of the operation S301 may be applied to the operation S515 in the same or similar manner. Further, according to an embodiment, when there is no previous task, after the job ID exchange, the VNFM 430 may notify the VNF 450 that it is initial through a task query message. For example, the VNFM 430 may set the task result of the task query message to 'INIT (initiation)'.

In operation S517, the VNF 450 may transmit the task response message to the VNFM 430. As the operation S517 corresponds to the operation S303 of FIG. 3, the description of operation S303 may be applied to the operation S517 in the same or similar manner. The VNFM 430 may query the VNF 450 about what operation the VNFM 430 is to perform next. What operation the VNFM 430 will perform may be determined by the task type of Table 2. In some embodiments, upon responding to the task type, the VNF 450 may transmit to the VNFM 430 a parameter value or list along with the task type. The parameter value or list described above may be referred to as a task topping.

According to an embodiment, when a pre-operation or a post-operation of upgrading the VNF 450 needs to be performed internally on the VNF 450, the VNFM 430 is required to wait. The VNF 450 may transmit to the VNFM 430 a response message including a task type indicating "WAIT". Further, the VNF 450 may transmit to the VNFM 430 'wait time', which is a time to wait, together, as a task topping. In this case, the maximum time capable of waiting is a time point for adjusting the interface, and may be compromised in advance between the VNFM 430 and the VNF 450.

In operation S519, the VNFM 430 may perform a task-related procedure. As the operation S519 corresponds to the operation S305 of FIG. 3, the description of the operation S305 may be applied to the operation S519 in the same or similar manner.

The operations S515 to S519 may be performed one or more times. With repetition of operations S515 to S519, SW upgrade for the VNF 450 may be performed in the VNF 450. When the SW upgrade is completed through the operations S515 to S519, the VNF 450 may transmit a task response message indicating completion of the upgrade, to the VNFM 430. For example, the VNF 450 may transmit a task response message including the task type indicating 'JOB_COMPLETE', to the VNFM 430.

In operation S521, the VNFM 430 may update the VNFD ID. When the VNFM 430 receives the task response message indicating completion of the upgrade, the VNFD ID may be updated. For example, in case where the life cycle is normally terminated according to reception of 'JOB COMPLETE', the VNFM 430 may update the managed VNFD ID to the 'N+1' version.

In operation S523, the VNFM 430 may notify the NFVO 420 that the upgrade of the VNF 450 is completed.

In operation S525, the NFVO 420 may notify the operator 410 that the upgrade of the VNF 450 is completed. The operator 410 may identify the result through notifying in the GUI of the NFVO 420.

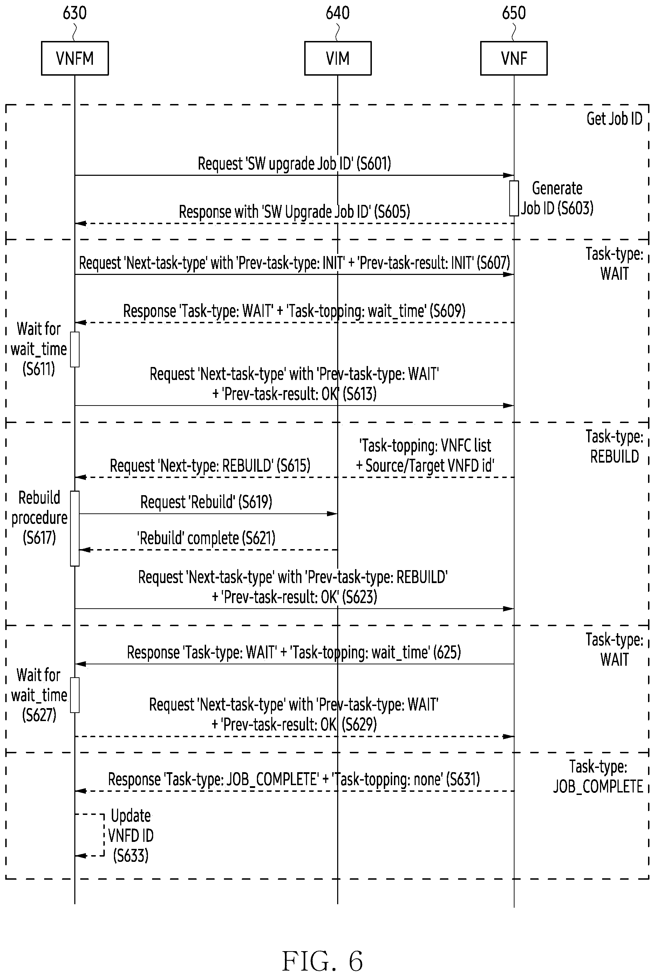

FIG. 6 illustrates an example of a query-based VNF upgrade procedure according to embodiments. A VNFM 630, a VIM 640, and a VNF 650 may correspond to the VNFM 430, the VIM 440, and the VNF 450 of FIG. 4, respectively. The description of the VNFM 430 may be applied to the VNFM 630 in the same or similar manner. The description of the VIM 440 may be applied to the VIM 640 in the same or similar manner. The description of the VNF 450 may be applied to the VNF 650 in the same or similar manner.

Referring to FIG. 6, in operation S601, the VNFM 630 may transmit a request message for SW upgrade to the VNF 650. The VNFM 630 may request a job ID (identification) for the SW upgrade from the VNF 650.

In operation S603, the VNF 650 may generate a job ID. The job ID is an ID that can be tracked by the VNFM 630 during the lifecycle of the upgrade. When upgrading or rollback is performed, the job ID may be used.

In operation S605, the VNF 650 may transmit a response message for SW upgrade to the VNF 650. The VNF 650 may reply to the VNFM 30 with a response including the job ID generated. The job ID according to embodiments may be a globally unique identifier in between all VNFs.

The job ID obtained through the procedures of operations S601 to S605 may be used for SW upgrade of the VNF 650. The job ID may be used until the SW upgrade is completed or fails. The SW upgrade procedure corresponding to the job ID may be terminated until the SW upgrade fails (e.g., the lifecycle expires) or through the completion of the SW upgrade (e.g., upon reception of a response message indicating JOB_COMPLETE in operation S631).

Hereinafter, operations S607 to S613 indicate a task procedure for waiting for a SW upgrade procedure. The task type may refer to 'WAIT'.

In operation S607, the VNFM 630 may transmit a task query message to the VNF 650. Through the task query message, the VNFM 630 may request the VNF 650 to perform a task required by the VNFM 630, for the SW upgrade of the VNF 650. According to an embodiment, for standard compatibility of the messages, the task query message may include information about a previous task type and information about a previous task result. In this case, since the task query message in the operation S607 is the first query message after the job ID for SW upgrade of the VNF 650 is obtained, the previous task type may be set to a value indicating initial transmission. For example, the previous task type may indicate 'INIT'. The previous task result may be set to a value indicating initial transmission. For example, the previous job result may be indicated by 'INIT'.

In operation S609, the VNF 650 may transmit a task response message to the VNFM 630. According to an embodiment, the task response message may include information on a task type. The task type may refer to "WAIT". According to an embodiment, the task response message may include information on task topping. Information on the task topping may be related to the task type. The information on the task topping may include a waiting time. For example, the information on the task type and the information on the task topping may refer to the Table 2 above.

In operation S611, the VNF 650 may wait for an internal task of the VNF 650. The VNFM 630 may wait for a waiting time indicated by the task response message. After the waiting time elapses, the VNFM 630 may perform a next operation for the VNF 650.

In operation S613, the VNFM 630 may transmit a next task query message to the VNF 650. The next task query message may refer to a message for inquiring about a next task of the task (e.g., waiting) performed in the operation S609. According to an embodiment, the VNFM 630 may transmit the next task query message including a result of the task performed in the operation S609, to the VNF 650. For example, the Table 3 may refer to the result of the task. As the result of the task is successful, the VNFM 630 may transmit the next task query message indicating 'OK', to the VNF 650.

While in FIG. 6, one VNF 650 is described as an example, embodiments of the disclosure are not limited thereto. The query procedure for upgrading may be performed in parallel for multiple VNFs. Usually, as a pre-upgrading procedure before performing the upgrade, the VNFs may return a task response message including a task type indicating 'WAIT', to the VNFM 630. Since the internal structures are different from each other for each VNF, all the waiting times for replying to the VNFM 630 may be different. In addition, even if it is one VNF 650, the waiting time may be different for each situation. If the pre-upgrading operation is finished sooner than the waiting time that the VNF 650 has replied to the VNFM 630, the VNF may wait longer. If the pre-upgrading operation is finished later than the waiting time that the VNF 650 replied to the VNFM 630, the VNFM 630 may query the VNF 640 about the new task type again. The VNF 650 may again reply to the VNF 640 with a task type indicating 'WAIT' and a task topping indicating the waiting time.

Hereinafter, operations S615 to S623 indicate a task procedure for waiting for SW upgrade rebuild. The task type may refer to 'REBUILD'.

In operation S615, the VNF 650 may transmit a task response message to the VNFM 630. The VNF 650 may transmit the task response message to the VNFM 630 in response to the query of the operation S613. According to an embodiment, the task response message may include information on a task type. The task type may refer to 'REBUILD'. According to an embodiment, the task response message may include information on task topping. The information on task topping may be related to the task type. For example, the information on the task type and the information on the task topping may refer to the Table 2 above. The information on the task topping may include a VNF component (VNFC) list, an identification (ID) of a source VNF descriptor (VNFD), and a target VNFD ID.

Since the VNF 650 is now ready for the upgrade, the VNF 650 may request a rebuild from the VNFM 630. The rebuild may refer to a command of an open stack installed in the VIM 640 that manages virtual resources. The rebuild may be used to replace the image of the virtual resource. In case where the VNF 650 is upgraded through rebuilding, the VNF 650 may return the VNFC list (e.g., Table 2) together. The task response message of the VNF 650 may include a VNFC list. The task response message of the VNF 650 may include a source VNFD ID. The task response message of the VNF 650 may include a target VNFD ID. According to an additional embodiment, the task response message may include priority information about which VNFC is to preferentially rebuild.

In operation S617, the VNFM 630 may perform a rebuild procedure. The VNFM 630 may request the VIM 640 to perform a rebuild command of an open stack.

In operation S619, the VNFM 630 may request the VIM 640 to rebuild.

In operation S621, the VNFM 630 may receive a response to the request for rebuild from the VIM 640. The VNFM 630 may receive as a response the execution result according to the rebuild command of the open stack from the VIM 640.

In operation S623, the VNFM 630 may transmit a next task query message to the VNF 650. The next task query message may refer to a message for query about the next task of the task (e.g., rebuild) performed in the operation S623. According to an embodiment, the VNFM 630 may transmit, to the VNF 650, a next task query message including the result of the task performed in the operation S627. For example, the result of the task may refer to the Table 3 above. Since the result of the task is successful, the VNFM 630 may transmit the next task query message indicating 'OK' to the VNF 650.

Hereinafter, operations S623 to S629 indicate a task procedure for waiting for a SW upgrade procedure. The task type may refer to 'WAIT'. The VNF 650 may return 'WAIT' to the VNFM 630 for setting of a post-upgrade task.

In operation S625, the VNF 650 may transmit a task response message to the VNFM 630. The VNF 650 may transmit a task response message to the VNFM 630 in response to the query of the operation S623. According to an embodiment, the task response message may include information on a task type. The task type may refer to 'WAIT'. According to an embodiment, the task response message may include information on task topping. The information on task topping may be related to the task type. The information on the task topping may include a waiting time. For example, the information on the task type and the information on the task topping may refer to the Table 2.

In operation S627, the VNFM 630 may wait for an internal task of the VNF 650. The VNFM 630 may wait for a waiting time indicated by the task response message. After the waiting time elapses, the VNFM 630 may perform the next operation for the VNF 650.

In operation S629, the VNFM 630 may transmit a next task query message to the VNF 650. The next task query message refers to a message for querying about a next task of the task (e.g., waiting) performed in the operation S627. According to an embodiment, the VNFM 630 may transmit, to the VNF 650, the next task query message including the result of the task performed in the operation S627. For example, the result of the task may refer to the Table 3 as above. Since the result of the task is successful, the VNFM 630 may transmit the next task query message indicating 'OK' to the VNF 650.

Hereinafter, operations S631 to S633 indicate a task procedure for completing the SW upgrade procedure. The task type may indicate 'JOB_COMPLETE'.

In operation S631, the VNF 650 may transmit a response message to the VNFM 630. The VNF 650 may transmit a task response message to the VNFM 630 in response to the query of the operation S629. Since the upgrade procedure is completed, the VNF 650 may include information representing the task type indicating the completion in the response message. As mentioned in the Table 2, task topping may not be required.

In operation S633, the VNFM 630 may update the VNFD ID of the VNF 650. For example, the VNFM 630 may replace the VNFD ID of the currently used version 'N' with the VNFD ID of the version 'N+1'. Based on identifying the completion of the upgrade procedure of the VNF 650, the VNFM 630 may normally terminate the lifecycle for the job ID. The job ID may be related to the upgrade procedure of the VNF 650.

VNF-related resource management may operate in a direct mode or an indirect mode. The direct mode is a mode in which the VNFM calls a VIM virtualized resource management task, and the indirect mode is a mode in which the VNFM calls an NFVO virtualized resource management task and the NFVO calls in turn the same toward VIM.

In FIGS. 5 to 6 described above, the operations of the query-based VNF upgrade procedure based on the direct-mode are described, but the embodiments of the disclosure are not limited thereto. Even in the indirect mode, the query-based VNF upgrade procedure may be performed. According to an embodiment, in the rebuild procedure S617, the VNFM 630 may not directly request the rebuild from the VIM 640, but the VNFM 630 may request the rebuild from the VIM 640 via an NFVO (e.g., the NFVO 420 of FIGS. 4 to 5).

While in FIG. 6, for upgrading the VNF 650, the tasks were performed in the order of waiting, rebuild, and waiting of the VNFM 630, those tasks illustrated in FIG. 6 are only of an embodiment, and the embodiments of the disclosure are not limited thereto. According to another embodiment, for upgrading the VNF 650, the VNFM 630 may perform only the waiting. For example, if the upgrade is not performed through the rebuild, then the VNF 650 may only return 'WAIT'. For example, the VNF 650 may upgrade itself through its own install manager. Thereafter, after the upgrade is completed, the VNF 650 may return 'JOB_COMPLETE' to the VNFM 630. Some of the tasks illustrated in FIG. 6 may be omitted, or other tasks (e.g., the tasks in Table 2) may be additionally performed.

The task query message and the task response message illustrated in FIG. 6 may be managed as one lifecycle corresponding to one job ID through the VNFM 630, even if the upgrade is performed in different ways.

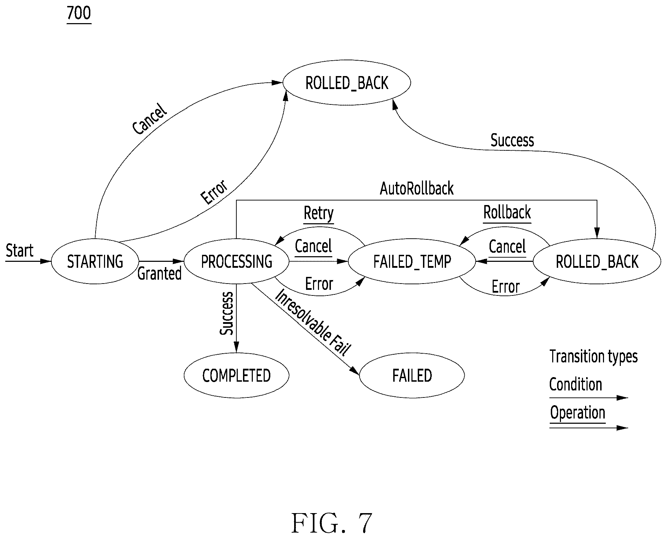

FIG. 7 illustrates an example 700 of a life cycle for a query-based VNF upgrade procedure according to embodiments. The ETSI standard indicates statuses of the VNF lifecycle shown in FIG. 7.

Referring to FIG. 7, all functions belonging to the life cycle of the VNF are required to comply with the procedures illustrated in FIG. 7. Table 4 below shows mapping of the status of each lifecycle of FIG. 9 and each process of the software upgrade procedure described in FIGS. 3 to 6.

**[Table 4]**

| **Lifecycle Status** | **Software upgrade procedure** |
|---|---|
| Starting | 'get Job ID' phase (Before the first Task request) |
| PROCESSING | 'Nest Task' request and response Loop phase |
| COMPLETE | When the 'JOB COMPLETE' task-result is send from VNF. |
| FAILED_TEMP | When the VNFM or VNF error occurs*The operator can select between RETRY, ROLL_BACK, and LIFECYCLE_FAIL options on the NFVO UI. |
| FAILED | When the operator selects LIFCYCLE_FAIL option in FAILED_TEMP status*In this case, manual trouble shooting is required. |

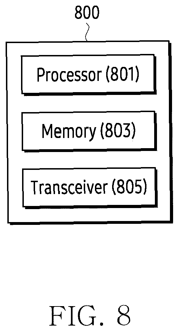

FIG. 8 illustrates a functional configuration of an electronic device 800 according to embodiments. As used herein, terms such as, e.g., 'portion', 'unit', 'module' and the like refer to a unit for processing at least one function or operation, and may be implemented by hardware, software, or a combination of hardware and software. The electronic device 800 may refer to a device in which one or more network functions for a query-based VNF upgrade procedure according to embodiments of the disclosure are implemented. The network functions are instances defined in the NFV environment illustrated in FIGS. 1A and 2B. According to an embodiment, the electronic device 800 may support NFV-MANO functions (e.g., NFVO, NVFM, or VIM). According to an embodiment, the electronic device 800 may support at least some of the NFV-MANO functions (e.g., NFVO, VNFM, or VIM). For example, the electronic device 800 may support the NFVO. For example, the electronic device 800 may support the VNFM. For example, the electronic device 800 may support the VIM. According to an embodiment, the electronic device 800 may support the VNF.

Referring to FIG. 8, the electronic device 800 may include a processor 801, a memory 803, and a transceiver 805. The processor 801 is configured to control overall operations of the electronic device 800. For example, the processor 810 records and reads data in the memory 803. For example, the processor 810 transmits and receives signals through the transceiver 805. Further, a control unit 240 records and reads data in a storage unit 230. FIG. 2A illustrates one processor, but embodiments of the disclosure are not limited thereto. The electronic device 800 may include at least one processor to perform the embodiments of the disclosure. The processor 801 may be referred to as a control unit or a control means. According to embodiments, the processor 801 may control the device to perform the operations of the electronic device 800 according to embodiments of the disclosure.

The memory 803 may store data such as a basic program, an application program, and setting information for the operations of the electronic device 800. The memory 803 may include a volatile memory, a non-volatile memory, or a combination of the volatile memory and the non-volatile memory. The memory 803 provides the stored data according to a request of the processor 810.

The transceiver 805 performs functions for transmitting and receiving signals via a wireless channel. For example, the transceiver 805 performs a conversion function between a baseband signal and a bit string according to the physical layer standard of the system. For example, during data transmission, the transceiver 805 generates complex symbols by encoding and modulating a transmission bit string. Further, during data reception, the transceiver 805 restores the received bit string by demodulating and decoding the baseband signal. Further, the transceiver 805 up-converts the baseband signal into a radio frequency (RF) band signal to transmit the RF band signal through an antenna, and down-converts the RF band signal received through the antenna into a baseband signal.

To this end, the transceiver 805 may include a transmission filter, a reception filter, an amplifier, a mixer, an oscillator, a digital-to-analog converter (DAC), an analog-to-digital converter (ADC), and the like. In addition, the transceiver 805 may include a plurality of transmission/reception paths.

The transceiver 805 transmits and receives signals as described above. Accordingly, the transceiver 805 may be referred to as 'transmitter', 'receiver', or 'transceiver'. In addition, throughout the following description, the term 'transmission' and 'reception' performed over a wireless channel, a backhaul network, an optical cable, Ethernet, and other wired paths are used as a meaning including that the aforementioned processing is performed by the transceiver 805. According to an embodiment, the transceiver 805 may provide an interface for communicating with other nodes in the network. That is, the transceiver 805 may convert a bit string transmitted from the electronic device 800 to another node, for example, another access node, another base station, an upper node, a core network, or the like, into a physical signal, and may convert a physical signal received from the other node into a bit string.

The MANO system may have an interface of an independent type of VNF software that is not affected by a specific VNF structure. That is, the MANO system may perform and manage software upgrades for various types of VNFs with a single interface. Regardless of whether the VNFs are either a VNF of the same vendor or a VNF of other vendors, the MANO system may perform and manage software upgrade with one interface. When the VNF is interlocked according to the interface of the software presented by the MANO, the VNF may use minimal resources and interlock as quickly as possible through a simplified procedure. Through the upgraded interface that is not affected by the VNF structure, resources generated during the interworking process and management costs subsequent to the interworking may be greatly reduced.

While some conventional methods for updating a network service descriptor have been proposed, the embodiments of the disclosure propose a method for upgrading a virtual network function (VNF). Not only does the NSD differ from the VNF, but the embodiments of the disclosure propose a procedure for upgrading the VNF through signaling between the VNFM and the VNF in the NFV-MANO system, in particular, a query from the VNFM to the VNF and a response from the VNF to the VNFM. As the above-described queries and responses are performed within the lifecycle management of the 3GPP or ETSI standard, the VNF upgrade procedure for accepting all the various types of vendors may be achieved according to embodiments of the disclosure.

According to embodiments, a method performed by a virtual network function manager (VNFM) of management and orchestration (MANO) may include receiving a request for upgrading a virtual network function (VNF) from an operator through a network function virtualization orchestrator (NFVO). The method may include transmitting a request message for software (SW) upgrade to the VNF. The method may include receiving a response message for the SW upgrade from the VNF. The method may include transmitting a task query message for requesting a task type for the SW upgrade to the VNF. The method may include receiving a task response message including information on the task type from the VNF. The method may include performing a task according to the task type for the SW upgrade based on the task response message.

According to an embodiment, the method may further include receiving a task response message including a task type indicating a completion of the SW upgrade from the VNF. The method may further include updating an identification (ID) of a VNF descriptor (VNFD) of the VNF in response to the completion of the SW upgrade.

According to an embodiment, the method may further include notifying the operator of the completion of the SW upgrade through the NFVO after updating the ID of the VNFD.

According to an embodiment, the upgrade request of the VNF may include information on the virtual network function descriptor (VNFD).

According to an embodiment, the response message for the SW upgrade may include job identification (ID). The job ID may be used for the task query message and the job response message.

According to an embodiment, the performing of the task may include, in case that the task type of the task response message indicates a wait for the SW upgrade, waiting for an internal task of the VNF for a designated time. The performing the task may further include information on the designated time.

According to an embodiment, the performing of the task may include, in case that the task type of the task response message indicates a rebuild of the SW upgrade, transmitting a request for the rebuild to a virtualized infrastructure manager (VIM) of the MANO. The performing of the task may include receiving a response to the request for the rebuild from the VIM.

According to an embodiment, the task response message may include a VNF component (VNFC) list, an identification (ID) of a source VNF descriptor (VNFD), and a target VNFD ID.

According to an embodiment, the method may further include transmitting, to the VNF, a next task query message for requesting a next task for the SW upgrade. The next task query message may include information on the task type and information on a task result for the task type.

According to an embodiment, the task result may be one of completed, failed, retry, rollback, rollback completed, or lifecycle end of the task corresponding to the task type.

According to embodiments, an electronic device of a virtual network function manager (VNFM) of management and orchestration (MANO) may include at least one transceiver and at least one processor coupled to the at least one transceiver. The at least one processor may be configured to receive an upgrade request of a virtual network function (VNF) from an operator through a network function virtualization orchestrator (NFVO). The at least one processor may be configured to transmit a request message for software (SW) upgrade to the VNF. The at least one processor may be configured to receive a response message for the SW upgrade from the VNF. The at least one processor may be configured to transmit to the VNF a task query message for requesting a task type for the SW upgrade. The at least one processor may be configured to receive a task response message including information on the task type from the VNF. The at least one processor may be configured to perform a task according to the task type for the SE upgrade, based on the task response message.

According to an embodiment, the at least one processor may be configured to receive from the VNF a task response message including a task type indicating completion of the SW upgrade. The at least one processor may be further configured to update an identification (ID) of a VNF descriptor (VNFD) of the VNF in response to the completion of the SW upgrade.

According to an embodiment, the at least one processor may be further configured to notify the operator of completion of the SW upgrade through the NFVO after the ID of the VNFD is updated.

According to an embodiment, the upgrade request of the VNF may include information on a virtual network function descriptor (VNFD).

According to an embodiment, the response message for the SE upgrade may include a job identification (ID). The job ID may be used for the task query message and the job response message.

According to an embodiment, the at least one processor may be configured to, for performing the task, wait for an internal task of the VNF for a designated time, in case that the task type of the task response message indicates a wait for the SW upgrade. The task response message may further include information on the designated time.

According to an embodiment, the at least one processor may be configured to, for performing the task, in case that the task type of the task response message indicates a rebuild of the SW upgrade, transmit a request of the rebuild to a virtualized infrastructure manager (VIM) of the MANO. The at least one processor may be configured to receive a response to the request for the rebuild from the VIM to perform the task.

According to an embodiment, the task response message may include a VNF component (VNFC) list, an identification (ID) of a source VNF descriptor (VNFD), and a target VNFD ID.

According to an embodiment, the at least one processor may be further configured to transmit to the VNF a next task query message for requesting a next task for the SW upgrade. The next task query message may include information on the task type and information on a task result for the task type.

According to an embodiment, the task result may be one of completed, failed, retry, rollback, rollback completed, or lifecycle end of the task corresponding to the task type.

According to embodiments, a method performed by a virtual network function (VNF) may include receiving a request message for software (SW) upgrade from a virtual network function manager (VNFM) of management and orchestration (MANO). The method may include transmitting a response message for the SW upgrade to the VNFM. The method may include receiving a task query message for requesting a task type for the SW upgrade from the VNFM. The method may include transmitting a task response message including information on the task type to the VNFM.

According to embodiments, an electronic device of a virtual network function (VNF) may include at least one transceiver and at least one processor coupled to the at least one transceiver. The at least one processor may be configured to receive a request message for software (SW) upgrade from a virtual network function manager (VNFM) of management and orchestration (MANO). The at least one processor may be configured to transmit a response message for the SW upgrade to the VNFM. The at least one processor may be configured to receive a task query message for requesting a task type for the SW upgrade from the VNFM. The at least one processor may be configured to transmit a task response message including information on the task type to the VNFM.

The methods according to various embodiments described in the specification or claims of the disclosure may be implemented in hardware, software, or a combination of hardware and software.

When implemented as software, a computer-readable storage medium storing one or more programs (software modules) may be provided. One or more programs stored in the computer-readable storage medium are configured for execution by one or more processors in an electronic device. The one or more programs include instructions that cause the electronic device to execute methods according to embodiments described in the specification or claims of the disclosure.

These programs (software modules or software) may be stored in a random access memory, a non-volatile memory including a flash memory, a read only memory (ROM), an electrically erasable programmable read only memory (EEPROM), a magnetic disc storage device, a compact disc ROM (CD-ROM), digital versatile discs (DVDs), other types of optical storage devices, magnetic cassettes, or the like. Alternatively, it may be stored in a memory configured by a combination of some or all of those. In addition, a plurality of respective constituent memories may be included.

Further, the program may be stored in an attachable storage device that is accessible via a communication network such as e.g., Internet, Intranet, a local area network (LAN), a wide LAN (WLAN), or a storage area network (SAN), or a communication network configured with a combination of those. Such a storage device may make access to a device performing an embodiment of the disclosure via an external port. In addition, a separate storage device on a communication network may access the device performing embodiments of the disclosure.

In the above-described specific embodiments of the disclosure, an element included in the disclosure is expressed in a singular or plural form depending on a presented specific embodiment. However, the singular form or plural form is selected to suit its presented situation for the convenience of description, and the disclosure is not limited to the singular element or the plural element presented, and either a component expressed in plural may be configured in a singular form or a component expressed in singular may be configured in a plural form.

While specific embodiments have been described in the detailed description of the present disclosure, it will be apparently understood that many variations are possible without departing from the scope of the present disclosure.

## Claims

1. A method performed by a virtual network function manager (VNFM) of management and orchestration (MANO), comprising:
receiving, from an operator through network function virtualization orchestrator (NFVO), an upgrade request of virtual network function (virtual network function));
transmitting, to the VNF, a request message for a software (SW) upgrade;
receiving, from the VNF, a response message for the SW upgrade;
transmitting, to the VNF, a task query message for requesting a task type for the SW upgrade;
receiving, from the VNF, a task response message including information on the task type; and
performing a task according to the task type for the SW upgrade based on the task response message.

2. The method of claim 1, further comprising:
receiving, from the VNF, a task response message indicating a completion of the SW upgrade; and
updating an identification (ID) of VNF descriptor (VNFD), in response to the completion of the SW upgrade.

3. The method of claims 1 to 2, further comprising:
notifying the operator of the completion of the SW upgrade through the NFVO after updating the ID of the VNFD.

4. The method of claims 1 to 3, wherein the upgrade request of the VNF includes information on the virtual network function descriptor (VNFD).

5. The method of claims 1 to 4,
wherein the response message for the SW upgrade includes job identification (ID), and
wherein the job ID is used for the task query message and the task response message.

6. The method of claims 1 to 5, wherein the performing the task comprises:
in case that the task type of the task response message indicates a wait for the SW upgrade, waiting for an internal task of the VNF for a designated time, and
wherein the task response message further includes information on the designated time.

7. The method of claims 1 to 6, wherein the performing the task comprises:
in case that the task type of the task response message indicates a rebuild of the SW upgrade, transmitting a request of the rebuild to a virtualized infrastructure manager (VIM) of the MANO; and
receiving a response to the request for the rebuild from the VIM.

8. The method of claims 1 to 7, wherein the task response message includes a VNF component (VNFC) list, an identification (ID) of a source VNF descriptor (VNFD), and a target VNFD ID.

9. The method of claims 1 to 8, further comprising:
transmitting, to the VNF, a next task query message for requesting a next task for the SW upgrade,
wherein the next task query message includes information on the task type and the information on a task result for the task type.

10. The method of claims 1 to 9, wherein the task result is one of completed, failed, retry, rollback, rollback completed, or lifecycle end of the task corresponding to the task type.

11. An electronic device of a virtual network function manager (VNFM) of management and orchestration (MANO), comprising:
at least one transceiver; and
at least one processor coupled to the at least one transceiver,
wherein the at least one processor is configured to:
receive, from an operator through network function virtualization orchestrator (NFVO), an upgrade request of virtual network function;
transmit, to the VNF, a request message for a software (SW) upgrade;
receive, from the VNF, a response message for the SW upgrade;
transmit, to the VNF, a task query message for requesting a task type for the SW upgrade;
receive, from the VNF, a task response message including information on the task type; and
perform a task according to the task type for the SW upgrade based on the task response message.

12. The electronic device of claim 11, wherein the at least one processor is configured to perform one of methods of claims 2 to 10.

13. A method performed by a virtual network function (VNF), the method comprising:
receiving, from a virtual network function manager (VNFM) of management and orchestration (MANO), a request message for a software (SW) upgrade;
transmitting, to the VNFM, a response message for the SW upgrade;
receiving, from the VNFM, a task query message for requesting a task type for the SW upgrade; and
transmitting, to the VNFM, a task response message including information on the task type.

14. An electronic device of a virtual network function (VNF), the electronic device comprising:
at least one transceiver; and
at least one processor coupled to the at least one transceiver,
wherein the at least one processor is configured to:
receive, from a virtual network function manager (VNFM) of management and orchestration (MANO), a request message for a software (SW) upgrade;
transmit, to the VNFM, a response message for the SW upgrade;
receive, from the VNFM, a task query message for requesting a task type for the SW upgrade; and
transmit, to the VNFM, a task response message including information on the task type.
